# FASCICULE DE BREVET EUROPEEN

(11) **EP 1 206 980 B1**
(45) Date de publication et mention de la délivrance du brevet: **31.05.2006**
(21) Numéro de dépôt: 01402953.2
(22) Date de dépôt: 16.11.2001
(51) Int. Cl.: B09B 1/00, B65F 9/00, B65G 67/24

(54) **Ensemble automatique de stockage et d'alimentation de déchets recyclables et son utilisation**
Automatische Einrichtung zum Lagern und Zuführen von wiederverwertbaren Abfällen sowie ihre Anwendung
Automatic arrangement for storage and supply of recyclable wastes and its use

(30) Priorité: 17.11.2000 FR 0014868
(43) Date de publication de la demande: 22.05.2002
(73) Titulaire: VEOLIA PROPRETE, 92000 Nanterre (FR)
(72) Inventeur: Couttelle, Loic, 75116 Paris (FR)
(74) Mandataire: Ballot, Paul Denis Jacques

(56) Documents cités:
- DE-A- 2 460 480
- DE-A- 2 855 483
- DE-C- 932 958
- GB-A- 2 187 698

## Description

La présente invention se rapporte à un ensemble automatique de stockage et d'alimentation de déchets recyclables, et à son utilisation.

Jusqu'ici le stockage des déchets est réalisé sur des plates-formes aériennes sur lesquelles viennent se décharger les camions de collecte de déchets. L'acheminement, sur la chaîne de tri, des déchets stockés est ensuite réalisé manuellement à l'aide, par exemple, de pelle hydraulique.

Mais un tel mode de stockage ne permet pas d'optimiser le volume de déchets stockés qui présente sensiblement une forme conique, tandis que le volume utile est de la forme d'un parallélépipède.

Aussi il existe le besoin de disposer d'un ensemble de stockage et d'alimentation de déchets recyclables et de nature hétérogène qui permet, à la fois, de gérer automatiquement, et de façon optimale, le volume de stockage des déchets, et d'alimenter régulièrement et automatiquement en déchets la chaîne de tri, et ceci de façon à obtenir une meilleure harmonisation de l'ensemble de la chaîne de traitement de déchets.

Parmi les déchets traités, on a de préférence des multimatériaux qui sont constitués de bouteilles en plastique, de journaux-magazine, de cartons, d'emballages métalliques, d'emballages en aluminium, et de briques alimentaires, etc.

Ce problème est résolu par un ensemble automatique de stockage et d'alimentation de déchets recyclables de nature hétérogène, caractérisé en ce qu'il comprend :
- au moins deux silos de stockage de déchets disposés sensiblement parallèlement l'un par rapport à l'autre, chaque silo comprenant au moins chacun deux capteurs de remplissage disposés chacun à chaque extrémité du silo, deux arrivées de déchets et une sortie de déchets,
- un convoyeur de récupération et d'acheminement de déchets disposé à la sortie des silos, selon un axe perpendiculaire à l'axe longitudinal des silos et commun aux silos, ledit convoyeur comprenant un capteur d'arrivée de déchets en provenance de chaque silo, dirigé vers la sortie de chaque silo, et
- un extracteur des déchets disposé à la sortie du convoyeur et présentant un angle α compris entre environ 35 et 55°, et de préférence 45° par rapport à l'axe horizontal, ledit extracteur comprenant également un capteur de présence de déchets, et
- un automate.

Cet ensemble présente l'avantage de permettre une alimentation en déchets toujours régulière, sans aucun bourrage sur le convoyeur d'acheminement, avec une nette augmentation du rendement, de façon à ce que la chaîne de traitement disposée en aval de l'ensemble de l'invention fonctionne en continue 24 heures sur 24, avec une alimentation en déchets en quantité constante et de manière régulière, tout en ayant une excellente adaptation à tous types de déchets recyclables à trier.

L'invention présente, en outre, l'avantage d'optimiser le volume des déchets stockés à traiter en remplissant un volume sensiblement de forme parallélépipédique, tout en permettant une alimentation régulière de la chaîne de tri.

Un autre objet de l'invention est une utilisation de l'ensemble tel que défini précédemment pour stocker puis alimenter une chaîne de tri en déchets recyclables et de nature hétérogène.

Le capteur de remplissage de silo et le capteur d'arrivée des déchets dans le silo peuvent, chacun, être constitués d'au moins une cellule à ultrasons.

La cellule à ultrasons présente l'intérêt de capter correctement des informations électroniques avec une excellente fiabilité, quel que soit le taux des particules volantes présentes dans le volume d'air environnant.

Les silos peuvent comprendre une porte disposée à leur sortie, actionnable par exemple à l'aide d'un vérin, et reliée par des câbles électriques à l'automate qui gêne son ouverture et sa fermeture. De préférence, l'entrée des silos ne comprend pas de porte. En effet, seule une porte disposée à la sortie du silo peut s'avérer intéressante pour retenir le volume de déchets accumulés dans le silo avant son évacuation vers la chaîne de tri.

Les silos comprennent de préférence deux entrées de déchets situées à chaque extrémité du silo et, dans la partie supérieure des silos. Ils comprennent de préférence, par ailleurs, une seule sortie des déchets, située à l'extrémité proche du convoyeur. Cette sortie est de préférence disposée dans la partie inférieure du silo.

De préférence, la totalité du fond de chaque silo est recouverte d'au moins deux séries de fonds mouvants alternatifs, constitués chacun par trois longues règles parallèles de préférence en aluminium, et classiquement utilisés pour évacuer et/ou déplacer des masses importantes de matières. De tels éléments mobiles sont, déjà, incorporés dans le fond des camions de transfert de déchets.

De préférence, les fonds mouvants utilisés selon l'invention permettent le déplacement et la sortie des déchets, et peuvent être parallèles à l'axe longitudinal du silo.

Les silos de l'invention peuvent présenter une longueur allant d'environ 5 à 40 m, une largeur allant d'environ 1,5 à 5 m et une profondeur allant d'environ 2 à 8 m.

Chaque silo parallèle peut présenter un volume quasiment identique.

L'invention va maintenant être décrite à l'aide des figures annexées qui suivent, qui sont données uniquement à titre indicatif, et qui ne limitent nullement l'invention :
- la figure 1 représente une vue schématique de dessus de l'ensemble de l'invention,
- la figure 2 représente une vue schématique en coupe d'un silo de l'invention en cours de chargement,
- les figures 3A,3B,3C,3D représentent chacune une vue schématique en coupe d'un silo de l'invention détaillant les différentes étapes de son chargement, et
- la figure 4 représente une vue en coupe schématique du convoyeur et de l'extracteur selon l'ensemble de l'invention.

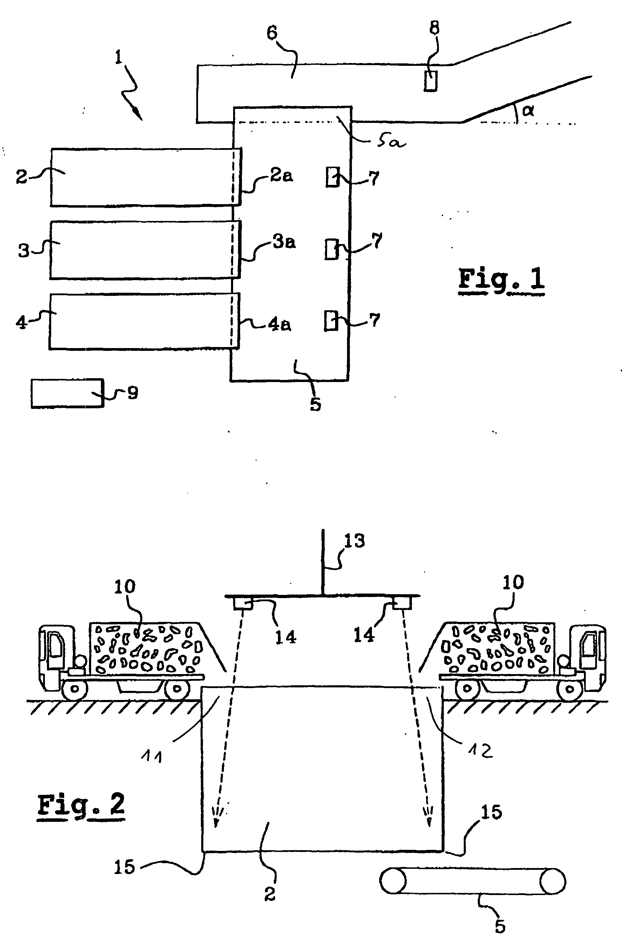

En se reportant sur la figure 1, l'ensemble de l'invention, de référence générale 1, comprend trois silos 2,3,4 disposés sensiblement parallèlement les uns aux autres, selon leur axe longitudinal, et ayant chacun environ une longueur intérieure d'environ 16,40 m, une largeur intérieure d'environ 2,80 m et une hauteur intérieure d'environ 3,70 m. Chaque silo comprend à chaque extrémité un capteur de remplissage 14.

L'ensemble de l'invention comprend en outre un convoyeur 5 de récupération et d'acheminement de déchets disposés à la sortie 2a,3a,4a des silos 2,3,4. Le convoyeur 5 d'une longueur d'environ 8 m est disposé sensiblement perpendiculairement à l'axe longitudinal des silos 2,3,4. Le convoyeur 5 est commun à chaque silo 2,3,4. La sortie 5a du convoyeur 5 est disposée à proximité d'un extracteur 6. Les déchets présents sur le convoyeur 5 se déversent ensuite sur l'extracteur 6.

Le convoyeur 5 et l'extracteur 6 sont chacun constitués d'un transporteur à bande classique.

Le convoyeur 5 comprend par ailleurs un capteur 7 disposé en face de chaque sortie 2a,3a,4a de chaque silo 2,3,4.

L'extracteur 6 comprend également un capteur 8 de présence de déchets.

L'ensemble de l'invention comprend enfin un automate 9 qui est relié à l'aide de plusieurs câbles électriques (non représentés), aux silos 2,3,4, au convoyeur 5 et à l'extracteur 6, ainsi qu'aux différents capteurs (7, 8, 14).

Ce capteur 7, en liaison par câbles électriques avec l'automate 9, capte les informations relatives à la fermeture/ouverture des portes de sortie de chaque silo, ainsi que celles relatives à la quantité de déchets sortant.

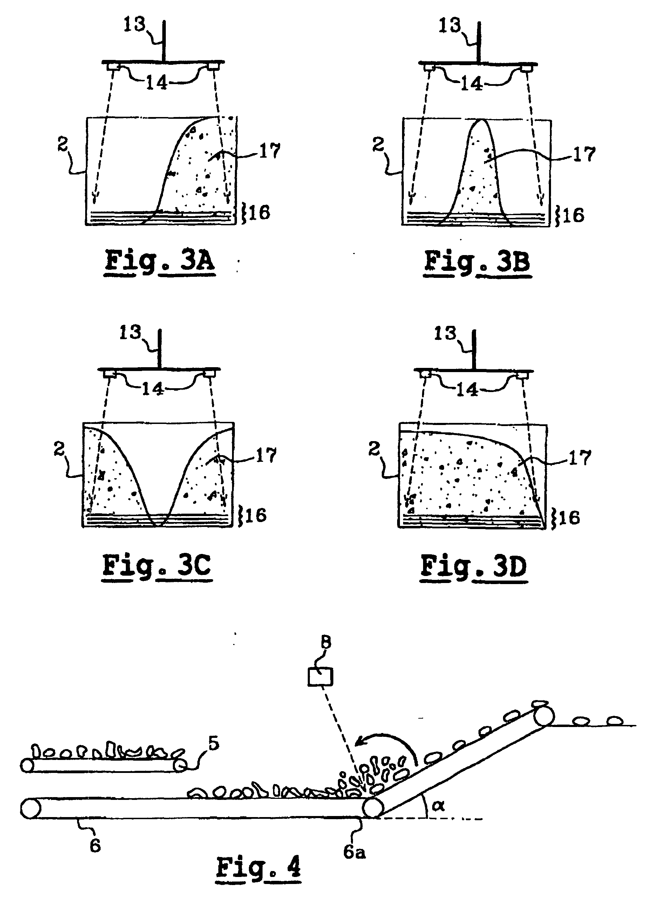

Comme on peut le voir sur la figure 2, qui représente par exemple le silo 2 en coupe, des camions de collecte 10 déchargent leur contenu en déchets recyclables dans le silo 2, à partir de l'entrée 11 ou 12 située dans la partie supérieure du silo 2.

Les camions peuvent se décharger simultanément à chaque entrée 11, 12 du silo, ou alors seulement à l'une d'entre elles.

Le schéma de la figure 2 qui ne représente qu'un seul silo peut être facilement généralisé à au moins deux silos.

Sur un portique 13 disposé au-dessus des silos 2,3,4, est disposé un capteur de remplissage 14 à chaque extrémité terminale du silo 2,3,4. Ces capteurs 14 sont constitués chacun d'une cellule à ultrasons. Les capteurs 14 sont orientés chacun vers la partie du fond 15 du silo 2,3,4 (représenté par les flèches en pointillés).

L'ensemble selon l'invention fonctionne de la manière suivante.

Des camions 10 déchargent leur contenu de déchets recyclables dans la partie supérieure du silo 2,3,4 par le biais des ouvertures ou entrées 11, 12. Les camions 10 peuvent vider leur contenu simultanément aux deux entrées 11,12 du silo 2,3,4 ou seulement à l'une d'entre elles.

Par exemple, les silos 2,3 peuvent comprendre des déchets de type multimatériaux, et le silo 4 des déchets de type papiers/journaux.

Au fur et à mesure du remplissage de chaque silo 2,3,4 les capteurs de remplissage 4 détectent la quantité de déchets présente dans le fond du silo.

Comme on peut le voir sur les figures 3A,3B,3C et 3D les capteurs 14 dirigés vers le fond de chaque silo 2,3,4 indiquent l'état de remplissage des silos.

Comme le montre les figures 3A et 3B, lorsque le fond 15 du silo 2 est plein, le capteur 14 en informe l'automate 7, par un signal électrique, qui fait alors actionner les fonds mouvants 16 disposés dans le fond du silo de manière à déplacer le tas de déchets vers la partie opposée du remplissage, lorsque le remplissage du solo ne s'effectue que d'un côté.

Le tas 17 de déchets, se retrouvant déplacé, laisse alors à nouveau de la place dans le silo du côté du remplissage. Cette opération de remplissage du silo en déchets, puis déplacement du tas de déchets lorsque ce dernier atteint la hauteur du silo, s'effectue progressivement jusqu'à ce que la totalité du silo soit remplie (figure 3D). Le déplacement du tas de déchets dans le silo, s'effectue toujours à l'aide des fonds mouvants dont le fonctionnement est bien connu de l'homme du métier.

Lorsqu'un silo est totalement rempli, s'effectue alors l'opération de déchargement du silo. Un seul silo peut être déchargé à la fois. Chaque silo est vidé successivement de façon à éviter le bourrage du convoyeur 5 et de l'extracteur 6.

Sur 24 heures de travail continu, on peut par exemple, traiter successivement deux silos remplis de déchets de type multimatériaux pendant 16 heures de travail diurne continu, puis traiter un silo rempli de papiers/journaux pendant 8 heures de travail nocturne, chaque silo étant rempli pendant la journée par les navettes permanentes des camions de collecte.

Lorsque la porte de sortie d'un silo s'ouvre, les déchets sont expulsés progressivement à l'aide des fonds mouvants 16 qui fonctionnement dans le sens opposé à celui utilisé pour le remplissage du silo.

Le convoyeur 5 comprend un capteur 7 d'arrivée des déchets, disposé en face de chaque sortie des silos.

Le rôle du capteur 7 d'arrivée de déchet est de permettre une arrivée progressive et régulière des déchets sur le convoyeur 5 de manière à éviter les bourrages et sa surcharge en déchets.

Le capteur 7 est également relié à l'automate 8, à l'aide de câbles électriques, qui en fonction des données reçues par les capteurs, ouvre ou ferme la porte de sortie d'un silo et, fait actionner ou non les fonds mouvants destinés à vider le silo pour alimenter le convoyeur 5 en déchets à trier ultérieurement sur la chaîne de tri.

L'alimentation en déchets sur le convoyeur fonctionne de manière séquentielle, gérée par l'automate 8.

Les déchets présents sur le convoyeur 5 sont alors dirigés vers l'extracteur 6.

Comme le montre la figure 4, l'extracteur 6, constitué d'un transporteur à bandes classique, présente un angle α d'environ 45° par rapport à l'axe horizontal. L'extracteur 6 est ensuite relié aux éléments 18 classiques d'une chaîne de tri.

Cette pente provoque un effet de vague par un retour en arrière permanent d'une partie des déchets avant leur ascension vers les éléments 18 du reste de la chaîne de tri (comme indiqué par la flèche). La partie angulaire 6a de l'extracteur 6 est donc toujours remplie par des déchets. Cela permet par ailleurs de réguler correctement l'alimentation de la chaîne de tri en déchets. En effet, seule une quantité constante et régulière en déchets est disposée sur l'extracteur puis dirigée vers la chaîne de tri.

## Revendications

1. Ensemble automatique de stockage et d'alimentation de déchets recyclables de nature hétérogène, **caractérisé en ce qu'**il comprend :
- au moins deux silos (2,3,4) de stockage de déchets disposés sensiblement parallèlement l'un par rapport à l'autre, chaque silo comprenant au moins chacun deux capteurs (13) de remplissage disposés à chaque extrémité du silo, deux arrivées de déchets et une sortie de déchets,
- un convoyeur de récupération (5) et d'acheminement de déchets disposé à la sortie des silos (2,3,4), selon un axe perpendiculaire à l'axe longitudinal des silos, et commun aux silos, ledit convoyeur (5) comprenant un capteur d'arrivée (7) de déchets en provenance de chaque silo, dirigé vers la sortie de chaque silo, et
- un extracteur (6) des déchets disposé à la sortie du convoyeur (5) et présentant un angle α compris entre environ 35 et 55°, et de préférence 45° par rapport à l'axe horizontal, ledit extracteur comprenant également un capteur de présence de déchets (8), et
- un automate (9).

2. Ensemble selon la revendication 1, **caractérisé en ce que** le capteur de remplissage (13), le capteur d'arrivée (7) de déchets et le capteur de présence de déchets sont constitués d'au moins une cellule à ultrasons.

3. Ensemble selon la revendication 1, **caractérisé en ce que** la sortie (2a,3a,4a) des silos (2,3,4) est fermée par une porte dont l'ouverture et la fermeture sont gérées par l'automate (9).

4. Ensemble selon la revendication 1, **caractérisé en ce que** le fond des silos est recouvert en totalité d'au moins deux séries de fonds de mouvants alternatifs (16) permettant la sortie des déchets, lesdits fonds mouvants étant parallèles à l'axe longitudinal du silo.

5. Ensemble selon la revendication 1, **caractérisé en ce que** le silo présente une longueur allant de 5 à 40 m, une largeur allant de 1,5 à 5 m et une profondeur allant de 2 à 8 m.

6. Utilisation de l'ensemble selon l'une des revendications précédentes pour stocker puis alimenter une chaîne de tri en déchets recyclables de nature hétérogène.

## Patentansprüche

1. Automatische Einrichtung zum Lagern und Zuführen von wieder verwertbaren Abfällen heterogener Natur, **dadurch gekennzeichnet, dass** sie umfasst:
- wenigstens zwei praktisch parallel zueinander angeordnete Silos (2, 3, 4) zur Lagerung von Abfällen, wobei jeder Silo zumindest jeweils zwei, an jedem Ende des Silos angeordnete Füllsensoren (13) sowie zwei Zuführungen und einen Ausgang für die Abfälle aufweist,
- eine Fördereinrichtung zur Wiedergewinnung (5) und zur Beförderung der Abfälle, welche gemäß einer senkrecht zu der Längsachse der Silos liegenden Achse am Ausgang der Silos (2, 3, 4) angeordnet ist, und welche den Silos gemeinsam ist, wobei die Fördereinrichtung (5) einen Zufuhrfühler (7) für die aus jedem Silo stammenden Abfälle aufweist, der zu dem Ausgang jedes Silos hin gerichtet ist, und
- eine Extrahiervorrichtung (6) für die Abfälle, die am Ausgang der Fördereinrichtung angeordnet ist und einen Winkel α zwischen ungefähr 35 und 55° und vorzugsweise von 45° bezüglich der horizontalen Achse aufweist, wobei die Extrahiervorrichtung ebenfalls einen Fühler für das Vorhandensein von Abfällen (8) umfasst, und
- einen Automaten (9).

2. Einrichtung gemäß Anspruch 1, **dadurch gekennzeichnet, dass** der Füllsensor (13), der Abfallzufuhrfühler (7) und der Fühler für das Vorhandensein von Abfällen von zumindest einer Ultraschallzelle gebildet sind.

3. Einrichtung gemäß Anspruch 1, **dadurch gekennzeichnet, dass** der Ausgang (2a, 3a, 4a) der Silos (2, 3, 4) von einer Tür verschlossen ist, deren Öffnen und Schließen von dem Automaten (9) gesteuert werden.

4. Einrichtung gemäß Anspruch 1, **dadurch gekennzeichnet, dass** der Boden der Silos in seiner Gesamtheit von zumindest zwei Reihen sich abwechselnd bewegender Böden (16) bedeckt ist, welche den Austritt der Abfälle ermöglichen, wobei die beweglichen Böden parallel zu der Längsachse des Silos angeordnet sind.

5. Einrichtung gemäß Anspruch 1, **dadurch gekennzeichnet, dass** der Silo eine Länge von 5 bis 40 m, eine Breite von 1,5 bis 5 m und eine Tiefe von 2 bis 8 m aufweist.

6. Verwendung einer Einrichtung gemäß einem der vorherigen Ansprüche zur Lagerung von und Versorgung eines Sortierbandes mit wieder verwertbaren Abfällen heterogener Natur.

## Claims

1. Automatic assembly for the storage and supply of recyclable waste of a heterogeneous nature, **characterised in that** it comprises:
- at least two waste storage silos (2, 3, 4) disposed substantially parallel to one another, each silo each comprising at least two filling sensors (13) disposed at each end of the silo, two waste feeds and one waste discharge,
- a waste recovery and routing conveyor (5) disposed at the discharge from the silos (2, 3, 4), along an axis perpendicular to the longitudinal axis of the silos, and common to the silos, the said conveyor (5) comprising a feed sensor (7) for waste coming from each silo, directed towards the discharge from each silo, and
- a waste extractor (6) disposed at the discharge from the conveyor (5) and having an angle α between approximately 35° and 55°, and preferably 45°, with respect to the horizontal axis, the said extractor also comprising a waste presence sensor (8), and
- an automatic controller (9),

2. Assembly according to claim 1, **characterised in that** the filling sensor (13), the waste feed sensor (7) and the waste presence sensor consists of at least one ultrasonic cell.

3. Assembly according to claim 1, **characterised in that** the discharge (2a, 3a, 4a) from the silos (2, 3, 4) is closed by a door whose opening and closure are managed by the automatic controller (9).

4. Assembly according to claim 1, **characterised in that** the bottom of the silos is entirely covered with at least two series of alternating moving bottoms (16) allowing the discharge of the waste, the said moving bottoms being parallel to the longitudinal axis of the silo.

5. Assembly according to claim 1, **characterised in that** the silo has a length ranging from 5 to 40 m, a width ranging from 1.5 to 5 m and a depth ranging from 2 to 8 m.

6. Use of the assembly according to one of the preceding claims for storing and then supplying a sorting line with recyclable waste of a heterogeneous nature.
